Europäisches Patentamt

(19) **European Patent Office**

**Office européen des brevets**

(11) Numéro de publication: **0 189 713**

**B1**

(12) **FASCICULE DE BREVET EUROPEEN**

(45) Date de publication du fascicule du brevet:
**07.01.88**

(51) Int. Cl.⁴: **B 60 T 8/22**, B 60 T 17/22

(21) Numéro de dépôt: **85402617.6**

(22) Date de dépôt: **24.12.85**

(54) Perfectionnements aux systèmes de freinage des roues arrières d'un véhicule.

(30) Priorité: **09.01.85 FR 8500232**

(43) Date de publication de la demande:
**06.08.86 Bulletin 86/32**

(45) Mention de la délivrance du brevet:
**07.01.88 Bulletin 88/1**

(84) Etats contractants désignés:
**DE GB IT**

(56) Documents cités:
**FR - A - 2 115 388**
**FR - A - 2 447 304**
**FR - A - 2 544 268**
**US - A - 3 398 993**

(73) Titulaire: **REGIE NATIONALE DES USINES RENAULT,
Boîte postale 103 8-10 avenue Emile Zola,
F-92109 Boulogne-Billancourt (FR)**

(72) Inventeur: **Royer, Claude, 17, rue Lucien Gille,
F-54800 Labry (FR)**
Inventeur: **Rousseau, Christian, 33, rue de la Mutualité,
F-92160 Antony (FR)**
Inventeur: **Bellard, Jean-Pierre, 12, Allée des Ablières,
F-78170 La Celle Saint Cloud (FR)**
Inventeur: **Marais, Jean-Luc, 26, rue Philippe Triaire,
F-92000 Nanterre (FR)**
Inventeur: **Brisset, Jean-Paul, 3 bis, Square du Gasselet,
F-94320 Thiais (FR)**

(74) Mandataire: **Réal, Jacques et al, Régie Nationale des
Usines Renault SCE 0804, F-92109 Boulogne Billancourt
Cedex (FR)**

ACTORUM AG

## Description

La présente invention a pour objet des perfectionnements aux systèmes de freinage des roues arrière d'un véhicule et en particulier aux limiteurs hydrauliques de l'effort de freinage.

Il convient tout d'abord de rappeler des données connues. Si
- $P_1$ est le poids statique d'un véhicule sur le train de roues avant,
- $P_2$ le poids statique sur le train arrière,
- H la hauteur du centre de gravité par rapport au sol,
- L l'empattement (distance entre trains avant et arrière),
- $T_1$ la traînée maximale ou effort tangent maximal au freinage sur le train avant,
- $T_2$ la traînée maximale sur le train arrière,
en supposant que le véhicule est un solide indéformable, qu'il roule sur un terrain à coefficient de frottement égal avec les différentes roues, on peut démontrer la relation:

$$\frac{H}{L}(T_1 + T_2)^2 + P_1 T_2 - P_2 T_1 = 0$$

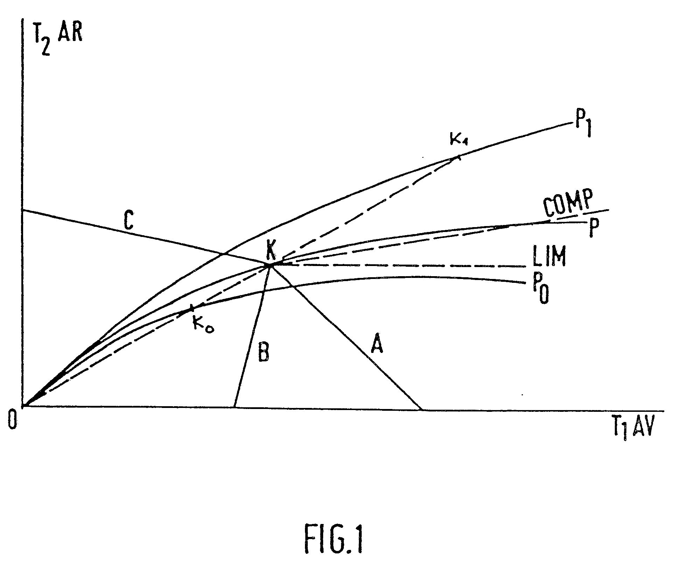

En portant $T_1$ en abscisses et $T_2$ en ordonnées, on obtient une parabole site de répartition d'équiadhérence correspondant à une valeur donnée des paramètres de charge (figure 1). Cette parabole traduit le freinage idéal, c'est-à-dire optimal sur toutes les roues. Mais, selon que le véhicule passe de la charge minimale (un conducteur sans bagage) à la charge maximale (passagers et chargement maximal), la parabole varie entre les deux extrêmes de la figure 1. Or, la règle bien connue veut que l'on ne bloque jamais les roues arrière avant les roues avant. Cela signifie donc sur la figure 1 qu'il faut toujours se tenir sous la parabole correspondant à la charge.

De plus, sur le graphique de la figure 1, on a tracé pour une charge courante donnée une parabole P comprise entre les deux paraboles limites $P_0$ et $P_1$. A cette parabole P est associée la droite A qui correspond à l'isodécélération.

Si $\gamma_L$ est la décélération du véhicule et M sa masse totale (charge comrpise)

$$T_1 + T_2 = M\gamma_L$$

et si $tg\alpha$ est l'angle de frottement des roues

$$T_1 + T_2 = M\gamma_L = Mg\, tg\alpha = tg\alpha$$

P étant le poids total du véhicule égal à $P_1 + P_2$.

La droite B correspond à la relation entre $T_1$ et $T_2$ quand les roues avant sont bloquées, la droite C quand les roues arrière sont bloquées. Ces droites B et C sont respectivement nommées les droites d'iso-adhérence des trains avant et arrière. Les droites A, B, C et la parabole P sont concourantes en K.

Lorsque l'on se trouve dans le quadrilatère limité par les axes de coordonnées et les droites B et C, aucun train de roues n'est bloqué; quand on se trouve sous la parabole au-delà de la droite B, les roues avant sont bloquées.

On a donc cherché dans l'art antérieur à obtenir un freinage aussi proche que possible de l'idéal, c'est-à-dire de la parabole P tout en restant en dessous pour éviter le blocage des roues arrière avant le blocage avant et les dangers que cela entraîne (tête à queue notamment). Or comme on l'a vu à la figure 1, selon la charge, la parabole P se déplace. Si l'on s'en tient à une proportionnalité entre $T_1$ et $T_2$, ce qui est techniquement aisément réalisable, on se trouve dans des conditions favorables entre O et K mais K se déplaçant de $K_0$ à $K_1$ (figure 1) selon la charge, il faut selon la parabole (entre $P_0$ et $P_1$) s'arrêter au point K correspondant.

On a donc envisagé dans l'art antérieur des dispositifs qui permettaient d'arrêter la montée de $T_2$ au point K correspondant à la parabole P et à un chargement donné du véhicule, et de limiter cette traînée de sorte que le freinage suivait progressivement la droite OK puis se déplaçait sur une parallèle à l'axe des abscisses grâce à cette limitation (LIM), ou, à partir du point K, la traînée $T_2$ évoluait linéairement dans le plan $T_1 T_2$ suivant une droite (COMP) de pente inférieure à celle de la droite OK.

Selon ces techniques antérieures, cette limitation est définie en fonction de la charge statique du véhicule dont la mesure permet de commander un dispositif limiteur généralement hydraulique commandant la répartition de pression hydraulique entre les freins avant et arrière. Quand on se trouve au point K, ce dispositif limiteur applique aux freins arrière une pression limite dite de coupure ou d'intervention fonction de cette charge statique.

Selon l'art antérieur le plus courant présentement, les variations de charge sont évaluées en mesurant les variations de hauteur de la caisse sur le train arrière. Ainsi, un jeu de transmission mécanique peut attaquer un ensemble constitué par un clapet limiteur et un ressort dont on modifie ainsi la précontrainte. Cela permet d'isoler ou non le circuit de freinage arrière par rapport au circuit de freinage avant, suivant que la pression délivrée par le système de freinage exerce sur ledit ensemble clapet-ressort un effort supérieur ou non à ladite précontrainte, cette dernière étant modifiée par la transmission mécanique en fonction de la variation de hauteur de la caisse sur le train arrière et donc de la variation de la charge.

On remarque que ce système modifiant le freinage à partir de l'information de charge est faussé par l'inclinaison vers l'avant de certains véhicules lors du phénomène dit du «salut». Lors d'un freinage, naît un couple de basculement de la caisse vers l'avant qui entraîne un soulèvement de la caisse par rapport au train arrière de sorte que la caisse penche vers l'avant; dans ce cas, l'information recueillie correspond à une charge apparente inférieure à la charge statique réelle qui doit être prise en compte dans le calcul du report de charge et donc dans le tracé de la parabole de répartition d'équi-adhérence afin de déterminer le point K correspondant à la valeur limite maximale de pression à appliquer sur les freins arrière.

La pression ainsi appliquée aux freins arrière est ainsi limitée à une valeur inférieure correspondant à la charge apparente inférieure à la valeur limite maximale correspondant à la charge statique réelle avant ce report de charge. Il en résulte donc une perte d'efficacité du freinage du train arrière.

De plus, la nécessité d'une liaison mécanique entre le limiteur et le train arrière oblige à disposer le limiteur dans une zone très exposée du véhicule à proximité du train arrière.

Un autre inconvénient apparaît dans le cas des suspensions à flexibilité variable. En effet, chaque hauteur H entre caisse et train arrière correspond à une charge statique C donnée appliquée auxdites suspensions. La relation entre hauteur et charge, H = f(C), dépend donc de la flexibilité de ces dernières et peut prendre une forme non linéaire liée à la loi de variation des flexibilités en fonction de l'enfoncement. Or les limiteurs compensateurs actuellement sur le marché n'assurent qu'une transformation linéaire entre hauteur de caisse H et pression de coupure Pc obtenue par ces limiteurs. La valeur de Pc résultant de cette relation linéaire, Pc = f(H), doit nécessairement être maintenue inférieure à la valeur résultant de la relation théorique, Pc = kC, pour que la pression dans le circuit de freinage arrière reste en dessous de la valeur limite (ordonnée de K) définie sur la parabole d'équi-adhérence relative à la charge statique considérée C. Il en résulte donc une perte d'efficacité de freinage sur les roues arrière.

Pour pallier ces inconvénients, l'invention a pour but l'association à un limiteur compensateur hydromécanique de moyens électroniques permettant d'une part de calculer la valeur limite de pression appliquée aux freins arrière en fonction de la charge statique réelle avant freinage et, d'autre part, d'assurer la commande dudit limiteur.

La présente invention concerne essentiellement un dispositif de freinage des roues arrière d'un véhicule comprenant un capteur de la variation de hauteur de caisse par rapport au train de roues arrière, connecté par des moyens de transmission à un clapet limiteur intercalé entre le maître cylindre et les freins arrière, et sollicité par un ressort en sens inverse de l'action desdits moyens de transmission, caractérisé par le fait que le capteur émet des signaux traités dans un circuit électronique déclenché par la commande de freinage qui enregistre les variations de hauteur de caisse hors freinage, les garde en mémoire en cours de freinage et envoie à un actionneur linéaire les informations nécessaires pour agir sur le clapet qui alimente proportionnellement selon un rapport donné les freins arrière en dessous d'un seuil défini par le calculateur en fonction de la variation de hauteur de caisse et limite l'augmentation du freinage arrière par rapport à celle du freinage avant au-delà de ce seuil selon un rapport plus faible que le rapport appliqué en deçà du seuil.

Pour ce faire, selon une caractéristique essentielle de l'invention, la hauteur entre caisse et train arrière est traduite en signaux électriques moyennés et mémorisés en dehors des phases de freinage pour constituer une valeur représentative de la charge statique du véhicule avant freinage. Ces signaux sont appliqués à un dispositif électronique dans lequel ils sont traités pour obtenir les signaux de commande d'un actionneur électromagnétique agissant sur le limiteur compensateur pour définir la valeur limite de pression appliquée aux freins arrière. De la sorte, même avec une loi de variation non linéaire liant charge et hauteur, on peut commander un actionneur électromagnétique linéaire, grâce au traitement des données. Un autre avantage réside dans la possibilité d'intégrer limiteur et maître cylindre pour n'avoir plus qu'un seul organe mécanique disposé dans le compartiment moteur.

Pour mieux faire comprendre les caractéristiques techniques et les avantages de la présente invention, on va en décrire un mode de réalisation, étant bien entendu que celui-ci n'est pas limitatif quant à son mode de réalisation et aux applications qu'on peut en faire.

On se reportera aux figures suivantes qui représentent:

la figure 1 un diagramme illustrant les rapports entre freinages avant et arrière;

la figure 2 le schéma d'un exemple de réalisation d'un circuit dit de freinage en X comportant un dispositif conforme à la présente invention;

la figure 3 un schéma de circuit électronique conforme à la présente invention;

la figure 4 un schéma de circuit de commande de l'actionneur électromagnétique linéaire;

la figure 5 un synoptique de fonctionnement du circuit électronique des figures 3 et 4.

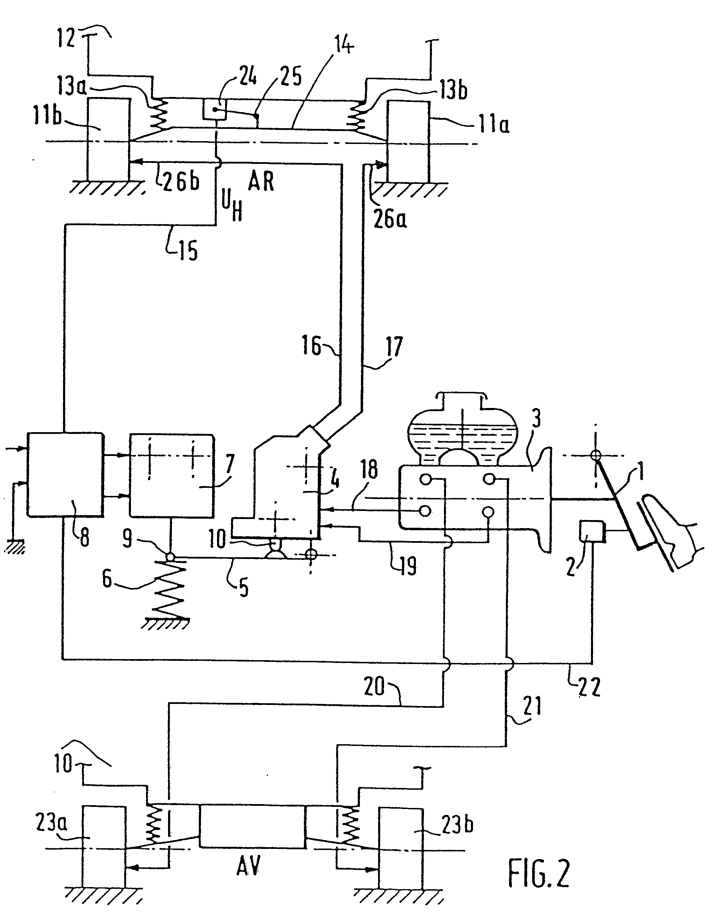

En se reportant à la figure 2, le circuit de freinage en X comportant le dispositif suivant l'invention comprend une pédale de frein 1 reliée au maître cylindre 3 délivrant une pression de freinage, d'une part, aux freins des roues avant 23a et 23b par l'intermédiaire des canalisations 20 et 21 et, d'autre part, aux freins des roues arrière 11a et 11b par les canalisations 18 et 19 alimentant un limiteur compensateur 4 transmettant puis limitant la pression délivrée auxdits freins arrière par les canalisations 16 et 17.

Le limiteur compensateur 4 comporte un levier 5 maintenu en appui contre le clapet 10 dudit limiteur compensateur par le ressort 6 et l'actionneur électromagnétique linéaire 7, ces deux derniers éléments 6 et 7 agissant sur la même articulation 9 du levier 5.

L'actionneur 7 est comandé par le circuit électronique 8 qui reçoit, d'une part, du contact 2, l'information de début de freinage par l'intermédiaire du conducteur électrique 22 et, d'autre part, par le conducteur électrique 15 provenant du capteur 24 l'information hauteur arrière de caisse représentative de la charge statique s'exerçant sur les roues arrière. Le capteur 24 est un potentiomètre, par exemple de type connu, fixé au niveau du train arrière sur la caisse 12 reposant sur les suspensions 13a et 13b. Le curseur 25 dudit capteur potentiométrique est mécaniquement solidaire d'un palonnier 14 dont les extrémités sont fixées sur les roues arrière 11a et 11b.

Cet ensemble fonctionne de la façon suivante. En fonction de la charge statique arrière, les suspensions 13a et 13b sont plus ou moins comprimées de sorte que la hauteur entre la caisse 12 et le palonnier 14 lié aux roues 11a et 11b varie en fonction de la charge suivant la loi desdites suspensions. Cette hauteur, dans le dispositif suivant l'invention, est convertie en signal électrique $U_H$ par le capteur potentiométrique 24 dont le corps est fixé à ladite caisse 12 et le curseur 25 est solidaire de l'axe des roues 11a et 11b par l'intermédiaire du palonnier 14; une judicieuse position permet au dispositif à palonnier de présenter l'avantage de mesurer une hauteur de caisse moyenne relative par rapport auxdites roues.

En fonction de ce signal électrique $U_H$ représentatif de la hauteur de caisse et donc de la charge statique arrière, le calculateur électronique 8 détermine le courant électrique à injecter dans l'actionneur 7 lors des phases de freinage, ledit courant étant fonction par conséquent de la charge statique arrière.

Dès que la pédale de frein est actionnée, le contact 2 envoie au calculateur 8 un signal de début de freinage qui provoque l'alimentation instantanée de l'actionneur par ledit calculateur avec la valeur de courant prédéterminée fonction de la charge statique évaluée avant freinage.

En fonction de ce courant, l'actionneur 7 exerce sur le clapet 10 par l'intermédiaire du levier 5 un effort qui s'ajoute à celui exercé en permanence par le ressort 6. Le clapet 10 est positionné dans le limiteur compensateur 4 pour isoler ou non le circuit de freinage arrière 16, 17 du maître cylindre 3 suivant que la pression délivrée par ledit maître cylindre exerce respectivement sur le clapet 10 un effort supérieur ou non à l'effort antagoniste appliqué par le ressort 6 et l'actionneur 7. La pression appliquée sur les freins des roues arrière 11a et 11b est par conséquent limitée à une valeur, fonction de l'effort exercé par l'actionneur 7 sur le clapet 10 du limiteur compensateur 4, par conséquent du courant injecté dans ledit actionneur par le calculateur 8 lors des phases de freinage, et donc fonction du signal électrique délivré par le capteur potentiométrique 24 représentatif de la charge statique sur les roues arrière.

L'effort exercé par le ressort 6 sur le clapet 10 est fonction de la précontrainte dudit ressort. Cette précontrainte est réglée pour correspondre à la plus faible valeur de limitation de la pression dans le circuit de freinage arrière, c'est-à-dire dans le cas où le véhicule est à vide.

Ainsi, lorsque l'actionneur n'est pas alimenté, la pression dans le circuit de freinage arrière est limitée à une valeur correspondant à la marche à vide du véhicule.

Cette disposition présente l'avantage d'une part de minimiser le dimensionnement de l'actionneur qui ne fournit que la valeur complémentaire d'effort en fonction de la charge par rapport au fonctionnement à vide et, d'autre part, en cas de fonctionnement dégradé, d'assurer une grande sécurité puisque lorsque l'actionneur n'est pas alimenté pour quelque panne que ce soit, la pression dans le circuit de freinage arrière est toujours limitée à la valeur de la charge la plus faible correspondant au tarage du ressort 6.

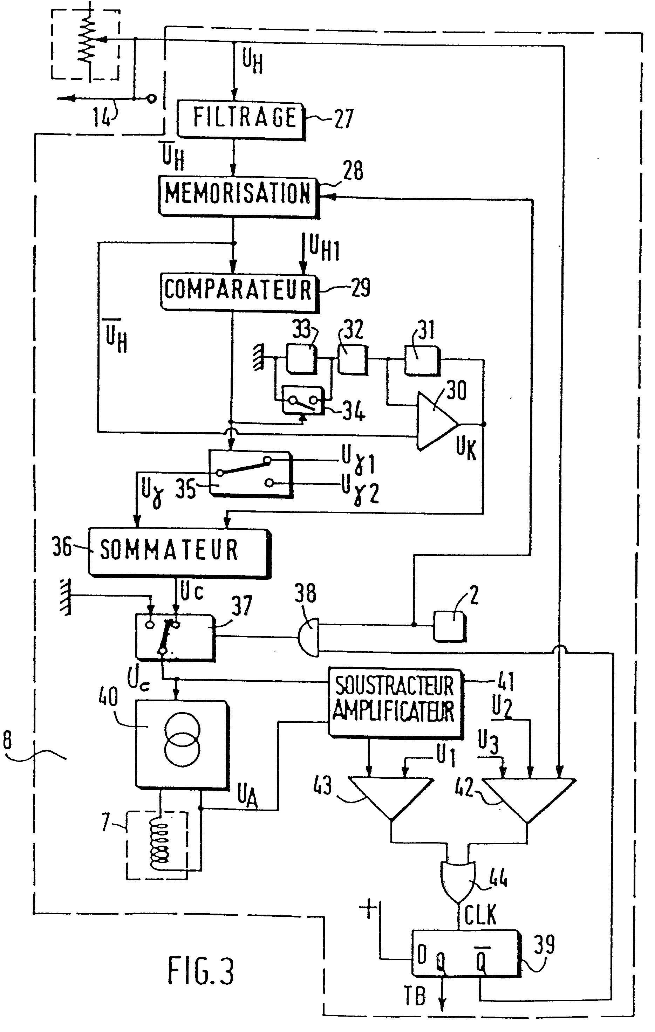

En se reportant à la figure 3, on comprendra mieux le principe de fonctionnement du calculateur électronique 8, qui est constitué essentiellement d'un circuit de filtrage 27, d'un circuit de mémorisation 28, d'un comparateur 29, d'un amplificateur à gain variable 30, d'une porte analogique 35, d'un sommateur 36, d'une porte analogique 37, d'un générateur de courant 40, d'un circuit soustracteur 41, d'un comparateur 43, d'un circuit comparateur à deux seuils 42, d'une porte logique 44 à fonction OU et d'une bascule 39.

Comme précédemment décrit sur la figure 2, le capteur potentiométrique 24 délivre une tension $U_H$ représentative de la hauteur H entre la caisse et les roues arrière 11a et 11b.

Une caractéristique du dispositif selon l'invention est de filtrer en dehors des phases de freinage et de mémoriser pendant les phases de freinage le signal électrique $U_H$ délivré par le capteur 24 et représentatif de la hauteur de caisse, donc de la charge statique.

En effet, afin d'éliminer toutes les perturbations de roulage pouvant modifier la hauteur H pour une charge statique donnée, ce signal $U_H$ est tout d'abord filtré dans le circuit 27 de tout type connu adéquat; on obtient à la sortie du circuit 27 un signal électrique $U_H$ filtré et donc représentatif de la hauteur H.

Cette tension $U_H$ est dirigée sur le circuit 28 de mémorisation qui, lors des phases de freinage, mémorise la valeur $U_H$ obtenue en dehors des phases de freinage et donc représentative de la charge statique avant le report de charge et le basculement dus au freinage. Le circuit 28 est un amplificateur échantillonneur bloqueur de tout type connu.

Dès que la pédale de frein est enfoncée, la sortie du contact 2 provoque la mémorisation de la tension $U_H$ alors présente sur l'une des entrées de cet amplificateur. Ainsi, on obtient une valeur filtrée et mémorisée $U_H$ fonction linéaire ou non de la charge C, en fonction des lois de variation de flexibilités préenregistrées des suspensions 13a et 13b représentées sur la figure 2, dans le cas d'un potentiomètre 24 de type linéaire: $U_H = kH = f(C)$.

Une autre caractéristique du dispositif selon l'invention est de permettre de linéariser $U_H = f(C)$ pour obtenir directement un signal de commande $U_c$ de l'actionneur, linéaire en fonction de la charge C quelles que soient les lois de variation des flexibilités.

On peut ici, sans sortir du cadre de l'invention, faire appel à diverses variantes. A titre illustratif, on citera les deux suivantes:

— une première variante de réalisation consiste à associer à chaque type de suspension un potentiomètre 24 assurant une relation $U_H = g(H)$ inverse de la loi de variation des flexibilités des suspensions $H = f(C)$ telle que $(g) = k(f^{-1})$;

— une seconde variante illustrée par la figure 3 consiste à linéariser électroniquement la fonction $U_H = f(C)$. L'exemple décrit à titre non limitatif traite d'une loi de flexibilité à deux pentes.

$$H = \alpha_1 C + \beta_1 \text{ pour } C \leqslant C_1 \text{ et}$$
$$H = \alpha_2 C + \beta_2 \text{ pour } C > C_1 \text{ avec}$$
$$\alpha_1, \alpha_2 < 0, \text{ et}$$
$$\beta_1, \beta_2 > 0.$$

Le potentiomètre 24 délivre à sa sortie une tension $U_H$ linéairement décroissante en fonction de H et donc dépendant de la charge C suivant les relations:

$$U_H = \alpha'_1 C + \beta'_1 C \text{ pour } C \leqslant C_1, \text{ ou } U_H \leqslant U_{H1} \text{ et}$$
$$U_H = \alpha'_2 C + \beta'_2 \text{ pour } C > C_1 \text{ ou } U_H > U_{H1} \text{ avec:}$$
$$\alpha'_1, \alpha'_2 > 0, \text{ et}$$
$$\beta'_1, \beta'_2 > 0.$$

Pour obtenir une relation linéaire entre la tension de commande $U_c$ de l'actionneur et la charge statique C telle que $U_c = k C + \gamma$, les circuits 29, 30, 31, 32, 33, 34, 35, 36 assurent la transformation suivante:

$$U_c = \frac{k}{\alpha'_1} U_H + \gamma_1 \text{ pour } U_H \leqslant U_{H1} \text{ avec } \gamma_1 = \gamma - \frac{k\beta'_1}{\alpha'_1}$$

et

$$U_c = \frac{k}{\alpha'_2} U_H + \gamma_2 \text{ pour } U_H > U_{H1} \text{ avec } \gamma_2 = \gamma - \frac{k\beta'_2}{\alpha'_2}$$

La valeur filtrée et mémorisée $U_H$ est comparée à une tension de référence $U_{H1}$ dans le circuit comparateur 29 à l'aide des moyens de fixation de seuil non représentés.

Parallèlement, cette tension $U_H$ est appliquée à un amplificateur 30 dont le gain est déterminé par l'élément résistif 31 monté en contre-réaction et les éléments 32 ou bien 32 et 33 suivant que la porte analogique 34 est rendue passante ou non en fonction de l'état logique de la sortie du comparateur 29. Ainsi, le gain peut prendre deux valeurs discrètes:

$$G_1 = 1 + \frac{R_{31}}{R_{32}} \text{ pour } U_H \leq U_{H1}$$

et

$$G_2 = 1 + \frac{R_{31}}{R_{32} + R_{33}} \text{ pour } U_H > U_{H1}$$

et donc la tension délivrée en sortie de l'amplificateur 30 est:

$$U_k = G_1 U_H \text{ pour } U_H \leqslant U_{H1}$$
$$U_k = G_2 U_H \text{ pour } U_H > U_{H1}.$$

Cette tension $U_k$ est appliquée à un amplificateur sommateur 36 de type connu. La deuxième entrée dudit amplificateur reçoit une tension $U_\gamma$ délivrée par la porte analogique 35 à deux entrées sur lesquelles sont appliquées deux tensions de référence $U_{\gamma 1}$ et $U_{\gamma 2}$; ladite porte analogique étant commandée en synchronisme avec la porte 34 de fixation du gain de l'amplificateur 30 par l'état logique de la sortie du comparateur 29.

La tension $U_c$ obtenue à la sortie du sommateur 36 obéit en fonction de la tension $U_H$ à deux relations distinctes:

$$J_c\, G_1\, U_H + U\gamma_1 \text{ pour } U_H \leqslant U_{H1}$$
$$U_c = G_2\, U_H + U\gamma_2 \text{ pour } U_H > U_{H1}$$

Les valeurs $G_1$, $G_2$, $U\gamma_1$, $U\gamma_2$ peuvent être déterminées de sorte que:

$$G_1 = \frac{k}{\alpha'_1}; \quad G_2 = \frac{k}{\alpha'_2}; \quad U\gamma_1 = \gamma_1; \quad U\gamma_2 = \gamma_2$$

Cette tension $U_c$ est donc ainsi rendue linéaire en fonction de la charge statique C, quelle que soit la loi de variation des flexibilités des suspensions arrière.

La sortie du circuit sur laquelle la tension $U_c$ est constamment présente est reliée à l'entrée d'un commutateur analogique 37 dont la seconde entrée est reliée à la masse, l'entrée de la commande est connectée à la sortie d'une porte logique 38 à deux entrées de type ET; une entrée reçoit l'information délivrée par le contact de frein 2 et l'autre entrée est connectée à la sortie $\overline{Q}$ d'une bascule de type D utilisée pour prévenir les défauts.

Suivant l'état logique de la commande du circuit 37, la tension $U_c$ délivrée par le circuit 36 ou une tension nulle est appliquée par le circuit 37 à l'entrée du circuit 40 respectivement lorsque la pédale de frein est enfoncée ou non.

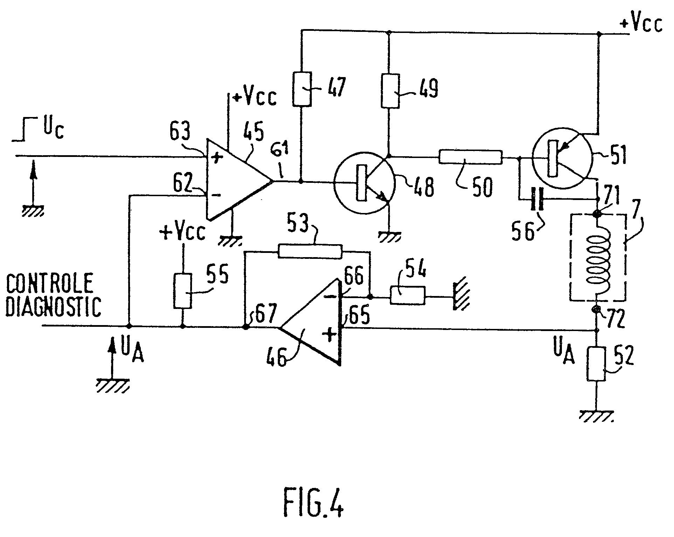

Le circuit 40 du type générateur de courant programmable en tension, dont la description sera faite ci-après en se référant à la figure 4, est connecté à l'entrée et à la sortie de l'actionneur 7 auquel il délivre une intensité I qu'il asservit:

— soit à une valeur proportionnelle à la tension $U_c$ mémorisée et appliquée à son entrée lors des phases de freinage et proportionnelle de la manière décrite ci-avant à la charge statique avant freinage;

— soit à une valeur nulle lorsqu'en dehors des phases de freinage, la tension appliquée à son entrée est nulle.

Les différentes phases de fonctionnement du dispositif selon l'invention se résument de la manière suivante:

En dehors des phases de freinage, la partie du dispositif selon l'invention constituée par les circuits numérotés de 27 à 40 et l'élément capteur 24 détermine en permanence:

— d'une part la valeur moyenne d'une tension $U_H$ représentative de la hauteur ainsi moyennée de la caisse par rapport au train arrière et donc fonction de la charge statique arrière avant freinage suivant la loi de flexibilité de suspensions arrière; et

— d'autre part une tension $U_c$ fonction de ladite tension $U_H$ suivant une loi inverse de la loi de variation des flexibilités arrière de façon à rendre globalement linéaire la relation entre la tension $U_c$ et la charge statique avant freinage.

Toujours en dehors des phases de freinage, le contact de frein 2 n'est pas activé, l'échantillonneur bloqueur 28 ne mémorise pas la tension $U_H$ et le commutateur analogique 37 applique une tension nulle au circuit 40 de commande de l'actionneur 7. Aucune intensité ne circule donc dans ledit actionneur.

Dès que la pédale de frein est enfoncée, par le conducteur, la sortie du contact de frein 2 change d'état logique et commande la mémorisation de la tension $U_c$ par le circuit échantillonneur bloqueur 28; la constante de temps du circuit de filtrage 27 est déterminée de façon que la valeur de tension $U_c$ mémorisée au début de freinage corresponde exactement à la valeur calculée en fonction de la charge statique avant freinage et donc avant report de charge et également de façon à éviter de mémoriser une charge statique transitoire résultant d'une succession de coups de freins. Le contact de frein 2 commande également le commutateur analogique 37 pour que la tension $U_c$ ainsi mémorisée soit appliquée à l'entrée du circuit 40 alimentant l'actionneur 7 avec une intensité I proportionnelle à ladite tension $U_c$ mémorisée avant freinage et donc à la charge statique arrière avant report de charge. Cette intensité est déterminée de façon que l'actionneur 7 exerce un effort qui, ajouté à la précontrainte du ressort 6 monté sur le levier 5, permette l'ouverture du clapet 10 provoquant l'isolation du circuit de freinage arrière 16 et 17 à une valeur de pression présente dans le circuit de freinage 18, 19 correspondant à la pression de coupure d'alimentation des freins arrière relative à la charge statique arrière mesurée de la façon décrite ci-dessus, avant freinage et par conséquent avant le report de charge.

Le dispositif selon l'invention comprend de plus des moyens d'autodiagnostic de défaillance que l'on décrit maintenant toujours en se référant à la figure 3.

La sortie du circuit 40 sur laquelle est présente une tension $U_A$, image du courant circulant dans l'actionneur 7, est reliée à la première entrée d'un circuit amplificateur 41 monté en soustracteur dont la deuxième entrée est reliée à l'entrée du circuit 40 sur laquelle est présente la tension $U_c$. Le circuit 41 amplificateur soustracteur est de type connu de l'homme de l'art et peut être réalisé par tout moyen adéquat. La sortie dudit circuit est connectée à une des deux entrées du circuit comparateur 43; la deuxième entrée est polarisée à une valeur de tension $U_1$ obtenue à partir de la tension d'alimentation générale du dispositif par des moyens non représentés de fixation d'un seuil de tension tel par exemple un pont diviseur résistif de type connu. La sortie dudit circuit comparateur 43 est reliée à la première entrée d'une porte logique 44 à fonction OU dont la deuxième entrée est reliée à la sortie du circuit comparateur 42 à deux seuils de tension. Deux entrées du circuit 42 sont polarisées respectivement aux valeurs de tension $U_2$ et $U_3$ obtenues à partir de la tension générale d'alimentation du dispositif par des moyens classiques et non représentés de fixation de seuils tels que des ponts diviseurs résistifs et la troisième entrée est reliée à la sortie du capteur potentiométrique 24 sur laquelle est présente la tension $U_H$. Le circuit 42 peut être de tout type connu en soi et est tel que sa sortie prend un état logique donné lorsque la tension $U_H$ est comprise entre les valeurs de référence $U_2$ et $U_3$ et change d'état logique lorsque $U_H$ sort de la plage de tension définie par lesdites valeurs $U_2$ et $U_3$.

Enfin, la sortie du circuit 44, porte logique à fonction OU, dont les deux entrées sont donc reliées respectivement aux sorties des circuits 43 et 42, est connectée à un moyen 39 de mémorisation de changement d'état logique de type connu en soi tel que par exemple une bascule D dont l'entrée CLK est connectée à la sortie du circuit 44 et l'entrée D est en permanence à un niveau logique donné.

Ces moyens 39, 41, 42, 43, 44 d'autodiagnostic et de mémorisation de défaillance fonctionnent de la manière suivante:

Selon une caractéristique du circuit 40 qui sera développée lors de la description ultérieure dudit circuit, la différence $\Delta U = U_c - U_A$ présente à la sortie du circuit soustracteur 41, devient supérieure à une certaine valeur de tension $U_1$ lorsqu'un défaut apparaît dans le fonctionnement de l'actionneur 7 ou du circuit 40. En prenant le seuil de tension $U_1$ égal à $\Delta U$, la sortie du circuit comparateur 43 change alors d'état logique et donc la sortie de la porte logique 44 à fonction OU. De même, dès que le capteur potentiométrique 24 présente un défaut tel un court-circuit ou une rupture de la piste résistive, la tension $U_H$ sort de la plage de tension définie par les valeurs $U_{H2}$ et $U_{H3}$ indicatrices du bon fonctionnement dudit potentiomètre. En prenant $U_2$ et $U_3$ respectivement égales à $U_{H2}$ et $U_{H3}$, la sortie du comparateur change alors d'état logique et donc la sortie de la porte 44.

Un changement permanent ou temporaire de la sortie de la porte «OU» 44 est par conséquent indicateur d'un défaut permanent ou intermittent de fonctionnement soit du circuit 40 et de l'actionneur 7 détecté par le circuit 43, soit du capteur 24 détecté par le circuit 42, soit enfin des deux à la fois.

Ce changement, éventuellement transitoire, est alors mémorisé par le circuit 39 dont la sortie Q prend l'état logique présent à l'entrée D dès qu'un changement d'état logique apparaît de façon même transitoire sur l'entrée CLK jusqu'à ce qu'une remise à zéro soit effective suivant un fonctionnement connu des circuits bascules de type D.

Par conséquent, dès que le circuit 40 ou l'actionneur 7 ou le potentiomètre 24 présente un défaut même intermittent, la sortie du circuit 39 change d'état logique de façon permanente et peut servir à actionner une alarme, non représentée, sur le tableau de bord TB.

Un circuit tel que représenté à la figure 3 peut être réalisé en faisant appel à des composants de conceptions très diverses; si un circuit de filtrage tel que 27 peut bien entendu être réalisé par un montage classique à base de résistances et de capacités, l'amplificateur échantillonneur bloqueur 29 assurant la mémorisation peut être par exemple du type décrit dans le DATA BOOK de la NATIONAL SEMI-CONDUCTOR (page 7.6) comprenant un circuit LM 108 et un circuit LF 198. On peut utiliser ce type de montage de sorte que lorsque la pédale de frein est enfoncée, la sortie du contact 2 connectée à l'entrée 8 du LF 198 change d'état, ce qui provoque la mémorisation de la tension $U_H$ alors présente à l'entrée 3 du LM 108. L'amplificateur sommateur 36 et l'amplificateur soustracteur 41 peuvent être réalisés en se basant sur des circuits du type LM 2902 par exemple.

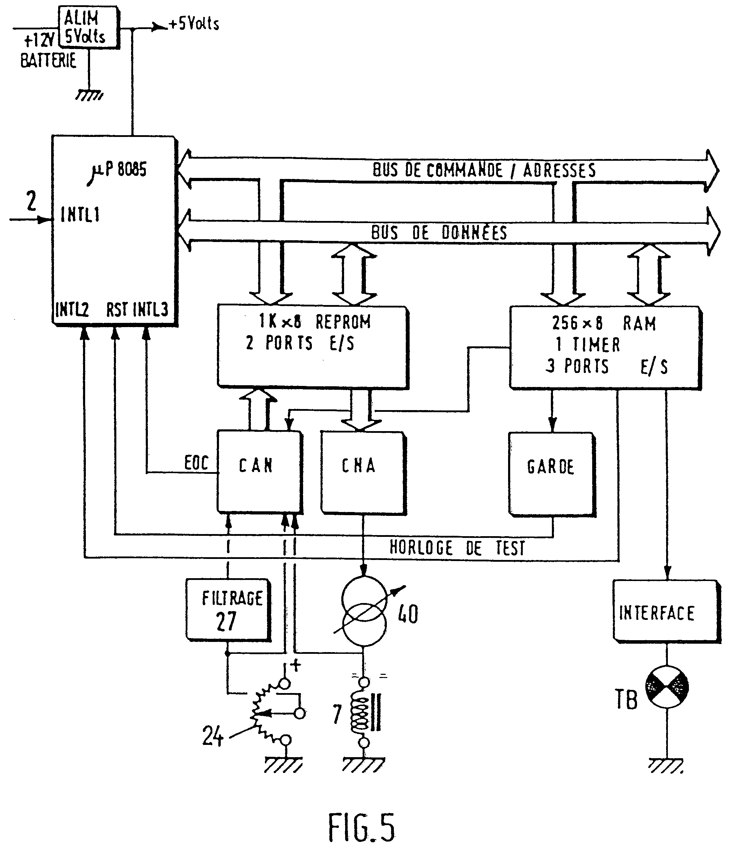

On peut également faire appel de façon plus marquée aux microprocesseurs et par exemple concevoir un ensemble tel celui dont le synoptique fait l'objet de la figure 5. Un microprocesseur µP

classique, par exemple de type 8085 est utilisé comme élément central. Les références 2, 7, 24, 27, 40, TB correspondent à celles de la figure 3. Le bus d'adresses et de commande et le bus de données sont connectés comme le montre le synoptique d'une part au microprocesseur µP, d'autre part à une mémoire morte reprogrammable REPROM 1K × 8 à 2 ports E/S et à une mémoire vide RAM 256 × 8 à 3 ports E/S et temporisateur. La mémoire morte est elle-même en communication avec un convertisseur analogique numérique CAN et un convertisseur numérique analogique CNA. Le microprocesseur est alimenté en + 5 V à partir de l'équipement automobile en + 12 V et reçoit en INTL1 les informations du contact 2 de la pédale de frein.

Le potentiomètre de charge 24 est relié à une entrée du CAN via le filtrage 27 (liaison 24-27-28 de la figure 3) et directement à une autre entrée du CAN (liaison 24-22 de la figure 3). Le CAN transmet ses informations au microprocesseur µP (entrée INTL3) et à la mémoire REPROM connectée à ce même microprocesseur par les bus.

En retour, le CNA transmet ses données au générateur 40 dont le courant alimente l'actionneur 7 et est également amené au CAN.

Par ailleurs, la mémoire vive RAM en liaison avec le microprocesseur µP transmet ses données au CAN et au microprocesseur: à l'entrée INTL2 directement (horloge de test), et à la remise à zéro RST via un dispositif de garde. La mémoire vive, via un interface, assure la signalisation sur le tableau de bord. On retrouve ainsi condensées dans des circuits classiques en informatique les différentes fonctions (commande de l'actionneur et affichage de diagnostic de défaillance) à partir des informations de charge (24) et de freinage (2). Après avoir analysé le dispositif dans son ensemble, on va décrire un mode de réalisation du générateur de courant 40 (figures 2 et 3) en se référant à la figure 4.

Le signal de consigne $U_c$, mis sous la forme d'une tension analogique connue prise comme image du courant à engendrer dans l'actionneur, est disposé sur l'entrée différentielle 63 du circuit analogique 45 de tout type connu (par exemple TAB 4453 A de Siemens). L'entrée différentielle 62 dudit circuit analogique reçoit une tension analogique de retour issue du circuit 46 du même type que le circuit 45. Le circuit 45, étant monté dans la configuration d'un amplificateur différentiateur à grand gain, engendre sur sa sortie 61 un signal tout ou rien dont la valeur est fonction du signe de la différence des tensions appliquées aux entrées 62 et 63 du circuit 45, l'élément 47 servant d'une part à polariser le transistor 48 de type adéquat (MJE 371) par exemple et d'autre part de résistance de charge du circuit 45, est monté entre l'alimentation Vcc et la partie commune entre sortie 61 du circuit 45 et base du transistor 48.

Le transistor 48, polarisé par les éléments 47 et 49, fonctionnant en bloqué saturé, commande par l'intermédiaire de l'élément résistif 50 le transistor de puissance 51 de type adéquat (2 N 3791 par exemple). L'élément de puisance 51 a son émetteur branché à la tension d'alimentation Vcc, sa base à l'élément résistif 50 et son collecteur connecté à la borne 71 de l'actionneur 7, la borne 72 de l'actionneur 7 étant branchée à une résistance 52 mise à la masse. L'élément 51 fonctionne en bloqué saturé.

La connaissance de la valeur de la résistance de l'élément 52 permet de définir le courant traversant l'actionneur 7 en recueillant la différence de potentiel $U_A$ entre la borne 72 de l'actionneur 7 et la masse.

L'actionneur électromagnétique 7 caractérisé par une constante de temps électrique $\tau = \dfrac{L}{R}$ non négligeable filtre le courant qui le traverse.

Ainsi, la tension aux bornes de l'élément 52 est continue et appliquée à l'amplificateur non inverseur 46 de type connu dont le gain K est fixé par le réseau de résistances 53 et 54 branchées respectivement entre la sortie 67 et l'entrée différentielle 66 dudit circuit et entre l'entrée 66 et la masse de ce même circuit. La résistance 55 branchée entre la sortie 67 du circuit 46 et l'alimentation Vcc sert de résistance de charge dudit circuit. La tension issue de la sortie 67 du circuit 46 réinjectée sur l'entrée différentielle 62 du circuit 45 est utilisée comme tension de comparaison. Dans ces conditions, la tension aux bornes de l'élément 52, par conséquent le courant traversant l'actionneur 7 suit, au gain de retour près, la tension de consigne $U_c$ par la relation:

$$I = \frac{U_c}{K \cdot R_{52}}$$

avec

$U_c$ = tension de consigne,

K = gain de la boucle de retour,

$R_{52}$ résistance en série avec l'actionneur 7.

La capacité 56 permet d'assurer le bon fonctionnement du système durant les commutations. Le contrôle de diagnostic s'effectue aisément par l'analyse de la tension $U_A$. En effet, lorsque le système fonctionne correctement, cette tension $U_A$ recopie la tension de consigne $U_c$; par contre, lorsque l'actionneur est en court-circuit, cette tension oscille entre la tension d'alimentation Vcc et la masse à une fréquence donnée par la constante de temps du système asservi.

**Revendications**

1. Dispositif de freinage des roues arrière d'un véhicule comprenant un capteur (24) de la variation de hauteur de caisse par rapport au train de roues arrière, connecté par des moyens de transmission (15) à un clapet limiteur (4) intercalé entre le maître cylindre (3) et les freins (26a, 26b) arrière, et sollicité par un ressort (6) en sens inverse de l'action desdits moyens de transmission, caractérisé par le fait que le capteur (24) émet des signaux traités dans un circuit électronique (8) déclenché par une commande de freinage (2) qui enregistre les variations de hauteur de caisse hors freinage, les garde en mémoire en cours de freinage et envoie à un actionneur linéaire (7) les informations nécessaires pour agir sur le clapet (4) qui alimente proportionnellement selon un rapport donné les freins arrière en dessous d'un seuil K défini par le calculateur en fonction de la variation de hauteur de caisse et limite l'augmentation du freinage arrière par rapport à celle du freinage avant au-delà de ce seuil K selon un rapport plus faible que le rapport appliqué en deçà du seuil.

2. Dispositif selon la revendication 1, caractérisé par le fait que le capteur (24) comporte un potentiomètre délivrant une tension $U_H$ au circuit électronique (8) qui comprend un filtre (27) suivi d'une mémoire (28) qui, déclenchée par la commande de freinage, délivre une tension significative $U_H$ de la variation de hauteur et de charge sur essieu arrière au début du freinage, d'une part, à un comparateur (29) avec une première tension de référence $U_{H1}$ et, d'autre part, à un amplificateur (30) à gain variable actionné à partir du comparateur (29), un premier gain $G_1$ étant appliqué à $U_H$ lorsque $U_H \leqslant U_{H1}$ et un second gain $G_2$ lorsque $U_H > U_{H1}$, et d'autre part à une porte analogique (35) synchrone avec le changement de gain dudit amplificateur et recevant deux tensions de référence $U_{\gamma_1}$ et $U_{\gamma_2}$, la sortie de l'amplificateur (30) d'une part et celle de la porte analogique (35) d'autre part amenant respectivement $G_1 U_H$ et $U_{\gamma_1}$ lorsque le comparateur détecte $U_H \leqslant U_{H1}$ et $G_2 U_H$ et $U_{\gamma_2}$ lorsque $U_H > U_{H1}$, à l'amplificateur sommateur (36), délivrant ainsi une tension de consigne $U_c$ au générateur de courant (40) alimentant sous la tension $U_A$ l'actionneur (7) de commande du clapet à travers un commutateur analogique (37) déclenché par la commande de frein.

3. Dispositif selon l'une des revendications précédentes, caractérisé par le fait qu'il comprend un système d'autodiagnostic de défaillance comprenant deux circuits comparateurs (42, 43) dont les sorties sont connectées à chacune des entrées d'une porte OU (44), l'un (43) comparant à une tension de référence $U_1$ la tension de sortie d'un amplificateur soustracteur (41) recevant la tension de consigne $U_c$ et la tension d'alimentation $U_A$ de l'actionneur (7) et l'autre (42) comparant à deux tensions de référence $U_2$ et $U_3$ la tension $U_H$ de mesure de variation de hauteur, la sortie de ladite porte OU (44) étant connectée à l'entrée CLK d'une bascule (39) en montage D qui déclenche par sa sortie $\overline{O}$ une alarme TB en cas de défaillance et par sa sortie $\overline{Q}$ via une porte ET (38) un commutateur analogique (37) d'alimentation en $U_c$ du générateur (40), l'autre entrée de la porte ET (38) étant connectée à la commande de freinage (2).

**Patentansprüche**

1. Vorrichtung zum Bremsen der Hinterräder eines Kraftfahrzeuges, aufweisend einen Fühler (24) für die Veränderung der Karosseriehöhe bezüglich der Hinterachse, der über eine Übertragungsanordnung (15) mit einem Begrenzungsventil (4) verbunden ist, das zwischen dem Hauptzylinder (3) und den hinteren Bremsen (26a, 26b) geschaltet ist und von einer Feder (6) beaufschlagt ist, in Gegenrichtung zur Wirkung der Übertragungsanordnung, dadurch gekennzeichnet, dass der Fühler (24) Signale überträgt in einen elektronischen Schaltkreis (8), ausgelöst durch eine Bremssteuerung (2), die die Veränderung der Karosseriehöhe während der Bremsung speichert, sie während der Bremsung im Speicher behält und einem linearen Antrieb (7) die notwendigen Informationen liefert um auf das Ventil (4) einzuwirken, das gemäss einem vorgegebenen Verhältnis proportional die hinteren Bremsen beaufschlagt unterhalb einer Schwelle K, die vom Rechner als Funktion der Veränderung der Karosseriehöhe festgelegt ist und die Vergrösserung der hinteren Bremsung begrenzt bezüglich derjenigen der vorderen Bremsung jenseits dieser Schwelle K gemäss einem geringeren Verhältnis als dem diesseits der Schwelle verwendeten Verhältnis.

2. Vorrichtung nach Anspruch 1, dadurch gekennzeichnet, dass der Fühler (24) ein Potiometer aufweist, das eine Spannung $U_H$ dem elektronischen Schaltkreis (8) zuführt, der ein Filter (27) aufweist, dem ein Speicher (28) folgt, der von der Bremssteuerung ausgelöst wird und der eine Spannung $U_H$, die der Änderung der Höhe und der Belastung auf der Hinterachse zu Beginn der Bremsung entspricht, einerseits einem Vergleicher (29) mit einer ersten Bezugsspannung $U_{H1}$ zuführt und andererseits einem Verstärker mit variablem Verstärkungsgrad, der vom Vergleicher (29) betätigt wird, wobei ein erster Verstärkungsgrad $G_1$ für $U_H$ verwendet wird, wenn $U_H \leqslant U_{H1}$ ist und ein zweiter Verstärkungsgrad $G_2$ verwendet wird, wenn $U_H > U_{H1}$ ist sowie einer Analogschaltung (35) zugeführt wird, synchron mit der Verstärkungsgradänderung des Verstärkers, die zwei Referenzspannungen $U_{\gamma_1}$ und $U_{\gamma_2}$ erhält, wobei der Ausgang des Verstärkers (30) einerseits und derjenige der Analogschaltung (35) andererseits das Signal $G_1$, $U_H$ und $U_{\gamma_1}$, sofern der Vergleicher $U_H \leqslant U_{H1}$ feststellt bzw. das Signal $E_2$, $U_H$ und $U_{\gamma_2}$, wenn $U_H > U_{H1}$ ist, dem Summierverstärker (36) zuführt, der demzufolge eine Steuerspannung $U_c$ dem Stromgenerator (40) zuführt, der mit der Spannung $U_A$ den Antrieb (7) zur Steuerung des Ventils beaufschlagt über einen analogen Umschalter (37), der durch die Bremssteuerung ausgelöst wird.

3. Vorrichtung nach einem der vorhergehenden Ansprüche, dadurch gekennzeichnet, dass sie ein automatisches Fehlersuchsystem aufweist mit zwei Vergleicherschaltkreisen (42, 43), deren Ausgänge jeweils mit einem der Eingänge einer ODER-Schaltung (44) verbunden sind, wobei eine (43) die Ausgangsspannung eines Subtraktionsverstärkers (41), der die Steuerspannung $U_c$ und die Versorgungsspannung $U_A$ des Antriebs (7) erhält, mit einer Referenzspannung $U_1$ vergleicht, während die andere (42) die Messspannung $U_H$ der Veränderung der Höhe mit zwei Referenzspannungen $U_2$ und $U_3$ vergleicht, während der Ausgang der ODER-Schaltung (44) mit dem Eingang CLK einer D-Kippschaltung (39) verbunden ist, die im Falle einer Fehlfunktion über ihren Ausgang $\overline{O}$ ein Alarmsignal TB auslöst und über

ihren Ausgang $\overline{Q}$ über eine UND-Schaltung (38) einen Analogumschalter (37) auslöst, um den Generator (40) mit $U_c$ zu versorgen, wobei der andere Eingang der UND-Schaltung (38) mit der Bremssteuerung (2) verbunden ist.

## Claims

1. An arrangement for braking the rear wheels of a vehicle comprising a detector (24) for detecting the variation in height of the body with respect to the rear wheel assembly, connected by transmission means (15) to a limiting valve (4) interposed between the master cylinder (3) and the rear brakes (26a, 26b), and urged by a spring (6) in the opposite direction to the action of said transmission means, characterised in that the detector (24) emits signals which are processed in an electronic circuit (8) triggered by a braking control (2) which records the variations in height of the body in the non-braking mode, memorises them in the course of braking and passes to a linear actuator (7) the information necessary to act on the valve (4) which supplies the rear brakes proportionally in accordance with a given ratio below a threshold K defined by the computing means in dependence on the variation in height of the body and limits the increase in the rear braking action in relation to that of the front braking action beyond said threshold K in accordance with a ratio which is lower than the ratio applied below the threshold.

2. An arrangement according to Claim 1, characterised in that the detector (24) comprises a potentiometer delivering a voltage $U_H$ to the electronic circuit (8) which comprises a filter (27) followed by a memory (28) which, triggered by the braking control, delivers a voltage $U_H$ which is representative of the variation in height and load on the rear axle at the beginning of the braking effect, on the one hand, to a comparator (29) with a first reference voltage $U_{H1}$ and, on the other hand, to a variable-gain amplifier (30) actuated from the comparator (29), a first gain $G_1$ being applied to $U_H$ when $U_H \leqslant U_{H1}$ and a second gain $G_2$ when $U_H > U_{H1}$, and on the other hand to an analog gate (35) synchronous with the change in gain of said amplifier and receiving two reference voltages $U_{\gamma_1}$ and $U_{\gamma_2}$, the output of the amplifier (30) on the one hand and that of the analog gate (35) on the other hand respectively carrying $G_1 U_H$ and $U_{\gamma_1}$ when the comparator detects $U_H \leqslant U_{H1}$ and $G_2 U_H$ and $U_{\gamma_2}$ when $U_H > U_{H1}$, to the summing amplifier (36) which thus delivers a reference voltage $U_c$ to the current generator (40) which feeds at the voltage $U_A$ the actuator (7) for controlling the valve by way of an analog switch (37) which is triggered by the brake control.

3. An arrangement according to one of the preceding claims, characterised in that it comprises an auto-diagnostic system comprising two comparators (42, 43) whose outputs are connected to each of the inputs of an OR-gate (44), one (43) comparing to a reference voltage $U_1$ the output voltage of a subtracting amplifier (41) receiving the reference voltage $U_c$ and the feed voltage $U_A$ of the actuator (7) and the other (42) comparing to two reference voltages $U_2$ and $U_3$ the voltage $U_H$ in respect of measurement in variation in height of the body, the output of said OR-gate (44) being connected to the input CLK of a D-type flip-flop (39) which triggers by way of its output Q an alarm TB in the event of a fault and by way of its output $\overline{Q}$, by way of an AND-gate (38), an analog switch (37) for the feed of $U_c$ to the generator (40), the other input of the AND-gate (38) being connected to the braking control (2).

FIG.1

FIG.2

FIG.3

FIG.4

FIG.5